# EUROPÄISCHE PATENTSCHRIFT

(11) **EP 0 806 437 B1**
(45) Veröffentlichungstag und Bekanntmachung des Hinweises auf die Patenterteilung: **07.07.1999**
(21) Anmeldenummer: 97107043.8
(22) Anmeldetag: 29.04.1997
(51) Int. Cl.: C08F 12/04

(54) **Verfahren zur Herstellung von Polystyrol durch kontinuierliche anionische Polymerisation**
Process for preparing polystyrene by continuous anionic polymerisation
Procédé de préparation de polystyrène par polymérisation anionique en continu

(30) Priorität: 09.05.1996 DE 19618678
(43) Veröffentlichungstag der Anmeldung: 12.11.1997
(73) Patentinhaber: BASF Aktiengesellschaft, 67063 Ludwigshafen (DE)
(72) Erfinder: Gausepohl, Hermann, Dr., 67112 Mutterstadt (DE); Fischer, Wolfgang, Dr., 67067 Ludwigshafen (DE); Loth, Wolfgang, Dr., 67098 Bad Dürkheim (DE); Thiele, Reiner, Prof. Dr., 67663 Kaiserslautern (DE)

(56) Entgegenhaltungen:
- EP-A- 0 307 238
- EP-A- 0 373 883
- EP-A- 0 595 119

## Beschreibung

Die Erfindung betrifft ein kontinuierliches Verfahren zur Herstellung von insbesondere glasklarem Polystyrol durch anionische Polymerisation von Styrol mittels eines Katalysators auf Grundlage eines Metallalkyls in einem Kreislaufraktor.

Die kontinuierliche anionische Styrolpolymerisation ist mehrfach beschrieben worden. Sie kann theoretisch sowohl isotherm wie adiabatisch oder bei irgend einem zwischen diesen beiden Möglichkeiten liegenden Betriebsverhalten durchgeführt werden.

In der US-PS 4 883 846 ist die adiabatische Verfahrensweise beschrieben, die in kleinen Reaktionsräumen hohe Umsätze erzielt, bei der sehr hohe Endtemperaturen auftreten, wenn eine hohe Monomerkonzentration gewählt wird, da die anionische Polymerisation bekanntlich von sich aus bis zum vollständigen Umsatz abläuft. Die auftretenden hohen Temperaturen können zu Schädigungen des bereits gebildeten Polymeren und Störungen des Ablaufs der Umsetzung führen. Mit adiabatisch betriebenen Verfahrensvarianten beschäftigen sich auch die DE-A1-42 35 980 und die DE-A1-43 27 495.

In der US-PS 3 035 033 und der EP-A1-176 611 ist die kontinuierliche anionische Styrolpolymerisation mit einer Verweilzeit von wenigstens ein bis drei Stunden in einem sog. Schleifenreaktor empfohlen worden, einem in sich zurücklaufenden Rohrreaktor, der sich bei dieser Verweilzeit wie ein idealer Rührkessel verhält, d.h. praktisch vollständige Rückvermischung erzielt. Dabei kann die Umsetzung gut kontrolliert werden, jedoch ist die schlechte Ausnutzung des Reaktorvolumens (geringe Raum-Zeit-Ausbeute; RZA) ein Nachteil dieses Verfahrens.

In der US-PS 4 442 273 ist ein spezieller Rohrreaktor beschrieben, in dem die kontinuierliche anionische Styrolpolymerisation mit Vorteil betrieben werden kann, der jedoch kompliziert aufgebaut und daher teuer ist.

Aufgabe der Erfindung ist es, ein vor allem hinsichtlich der möglichen Raum-Zeit-Ausbeute (RZA) und der Anlagenkosten wirtschaftliches Verfahren für die kontinuierliche anionische Styrolpolymerisation anzugeben, bei dem die Molmassenverteilung der gewünschten Polymeren über einen relativ weiten Bereich ohne Mehrfachdosierung des Monomeren oder des Initiators (vgl. hierzu DE-A1-42 35 786) beeinflußt werden kann und bei dem nur wenig niedermolekulares Polymerisat (Oligomere) gebildet wird.

Diese Aufgabe wird durch ein Verfahren der eingangs genannten gattungsmäßigen Art gelöst, bei dem das Styrolmonomer einem im wesentlichen isotherm betriebenen Reaktor ("Kreislaufreaktor") zugeführt wird, der als in sich zurücklaufende Rohrschleife ausgebildet ist, wobei die Umlaufgeschwindigkeit des Reaktionsgemisches und die mittlere Verweilzeit so eingestellt sind, daß der Monomerumsatz in der Rohrschleife mindestens 50 % erreicht und die Polymerisation in einem im wesentlichen rückvermischungsfrei arbeitenden Rohrreaktor zu Ende geführt wird.

Die Temperatur im Kreislaufreaktor wird zweckmäßig auf eine Temperatur zwischen 30 und 100°C eingestellt. Die Temperatur im nachgeschalteten Rohrreaktor kann z.B. ebenfalls 30 bis 100°C betragen; in vielen Fällen kann es vorteilhaft sein, in diesem Teil der Anlage nicht mehr zu kühlen (m.o.w. adiabatisches Betriebsverhalten), da nur noch ein Restumsatz, zweckmäßig mit möglichst hoher Geschwindigkeit stattfinden soll.

Während der Kreislaufreaktor im allgemeinen keine oder nur solche Einbauten aufweist, die den Wärmeaustausch mit der Wand oder die Rückvermischung fördern, wird der Rohrreaktor, der als Nachreaktor dient, bei Bedarf mit Einbauten versehen, die eine Pfropfenströmung begünstigen, d.h. ein möglichst rückvermischungsfreies Arbeiten ermöglichen. Es können z.B. die gegenwärtig erhältlichen Mischer vom Typ SMX oder SMXL (Gebr. Sulzer AG, Winterthur, Schweiz), sog. Kenix-Mischer (Chemineer Ltd. West Meadows, U.K) oder SMR-Reaktoren (Sulzer) verwendet werden, oder man verwendet anstelle eines Einzelrohrs mehrere parallele Rohrstrecken (Röhrenbündel).

Um eine dem isothermen Verhalten möglichst nahekommende Betriebsweise des Kreislaufreaktors sicherzustellen, sollte dieser eine spezifische Kühlfläche von wenigstens 50 m² je m³ Reaktorvolumen aufweisen und so aufgebaut sein, daß immer wieder frisches Reaktionsgemisch mit der Kühlfläche, d.h. den Wand- oder sonstigen Wärmeaustausch-Flächen in Berührung kommt.

Die Umsetzung findet zweckmäßig in Lösung statt, wobei die für die anionische Polymerisation üblichen Lösungsmittel wie Pentan, Cyclohexan, Methylcyclohexan, Toluol, Ethylbenzol oder Xylol eingesetzt werden. Die Monomer- bzw. Polymerkonzentration kann aber auch hoch sein, z.B. bis zu einem Massenbruch von etwa 0,8 und sollte im allgemeinen nicht unter 0,3 liegen, wenn das Verfahren wirtschaftlich bleiben soll.

Der Betriebsdruck ist unkritisch; er kann bei Bedarf den Eigenschaften des Reaktionsgemisches angepaßt werden, z.B. bis zu 50 bar betragen. In der Regel kann atmosphärischer Druck angewendet werden.

Als Initiatoren eigenen sich die einschlägig üblichen Alkalimetallalkyle, insbesondere Lithiumalkyl mit einem Alkylrest von 1 bis 8 C-Atomen. Bevorzugt ist n-Butyl- oder s-Butyl-Lithium.

### Aufbau und Betrieb einer Versuchsanlage

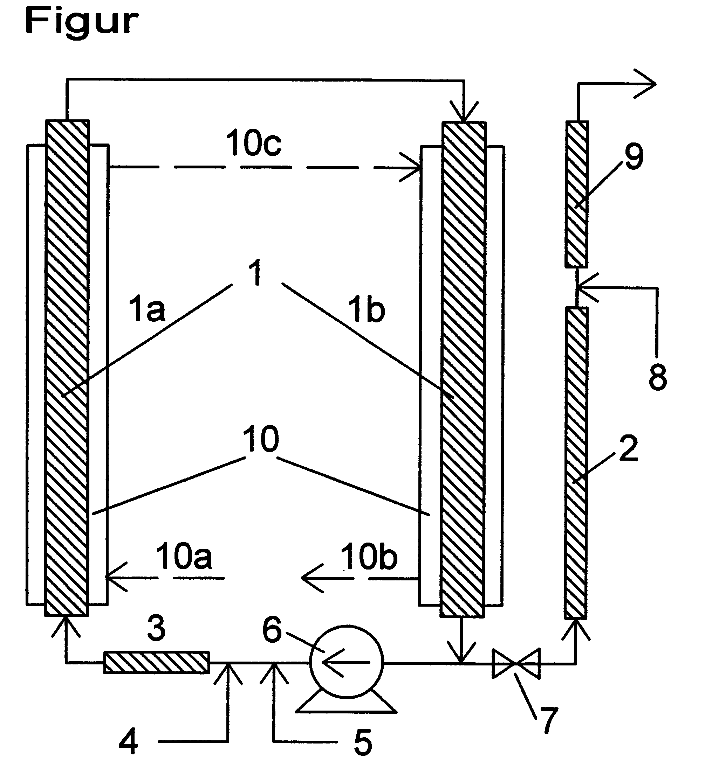

Die Figur zeigt schematisch eine erfindungsgemäß geeignete Anordnung aus zwei Reaktionsräumen 1 und 2. Der Kreislaufreaktor 1 besteht aus zwei Einzelrohren 1a und 1b von jeweils 4 m Länge und einem Durchmesser von 5 cm, die mit Kenics-Mischern bestückt sind und zusammen mit einer Mischstrecke 3 für die Einmischung der Zuläufe 4, 5 von Monomer- bzw. Initiatorlösung und einer Umlaufpumpe 6 einen Kreislaufreaktor bilden. Dieser kann bei einer Temperatur von 30 bis 100°C betrieben werden. Die Kühlfläche, die in diesem Fall ausschließlich von den Rohrwandungen gebildet wird, liegt oberhalb von 50 m² je m³ Reaktorvolumen.

Der Kreislaufreaktor 1 ist vom Rohrreaktor 2 (Nachreaktionsstrecke) durch ein Druckhalteventil 7 getrennt. Rohrreaktor 2 ist ebenfalls mit Kenics-Mischern ausgestattet, um hier eine Pfropfenströmung sicherzustellen.

Im Anschluß an den Nachreaktor 2 ist ein Zulauf 8 und eine Mischstrecke 9 für die Einmischung eines Mittels vorgesehen, mit dem die noch reaktionsfähigen Kettenenden des "lebenden" Polymeren inaktiviert werden können. Die Anordnung wird vervollständigt durch einen Kreislauf 10a, 10b, 10c zur Versorgung des Temperiermantels 10 des Kreislaufreaktors und die notwendigen Rohrverbindungen zwischen den wesentlichen Bauteilen (in der Figur nicht beziffert). Der Nachreaktor 2 ist bedarfsweise ebenfalls mit Mitteln zur Temperaturkontrolle ausgestattet (in der Figur nicht gezeichnet).

### Beispiel 1

**Tabelle 1a:**

| Verfahrensparameter | | |
|---|---|---|
| Betriebsbedingungen | Reaktor 1 | Reaktor 2 |
| C_{Monomer,0,ges}¹⁾ [kmol/m³] | 4,0 | |
| C_{Initiator}²⁾ [mol/m³] | 2,2 | |
| Umsatz | 0,64 | |
| Polymermassenbruch | 0,31 | ∼0,50 |
| Verweilzeit [min] | 25,2 | 8 |
| Temperatur, mittel [°C] | 35 | |
| Temperatur, Austritt [°C] | | 103 |
| Kreislaufverhältnis | 15,3 | |

| | | |
|---|---|---|
| 1) Zulauf, bezogen auf Gesamtzulauf; als Lösungsmittel wird - ebenso wie im folgenden Beispiel - Cyclohexan verwendet | | |
| 2) für Pₙ ∼1800 | | |

### Ergebnis Beispiel 1

| | |
|---|---|
| Produktausstoß [kg·h⁻¹] | 15,1 |
| Raum-Zeit-Ausbeute [kg·m⁻³·h^{-1]} | 755 |
| P_{W}³⁾ | 2200 |
| Uneinheitlichkeit U ⁴⁾ | 0,2 |

| | |
|---|---|
| 3) Polymerisationsgrad gewichtsgemittelt, gelchromatographisch | |
| 4) P_{w}/Pₙ-1 | |

### Beispiel 2

**Tabelle 2a:**

| Verfahrensparamter | | |
|---|---|---|
| Betriebsbedingungen | Reaktor 1 | Reaktor 2 |
| C_{Monomer,0,ges}¹⁾ [kmol/m³] | 4,1 | |
| C_{Initiator}²⁾ [mol/m³] | 1,8 | |
| Umsatz | 0,74 | |
| Polymermassenbruch | 0,37 | ∼0,50 |
| Verweilzeit [min] | 25,0 | 8 |
| Temperatur, mittel [°C] | 49 | |
| Temperatur, Austritt [°C] | | 99 |
| Kreislaufverhältnis | 15,3 | |

| | | |
|---|---|---|
| 1) Zulauf, bezogen auf Gesamtzulauf; als Lösungsmittel wird - ebenso wie im folgenden Beispiel - Cyclohexan verwendet | | |
| 2) für Pₙ ∼2200 | | |

### Ergebnis Beispiel 2

| | |
|---|---|
| Produktausstoß [kg·h⁻¹] | 15,2 |
| Raum-Zeit-Ausbeute [kg·m^{-3^{·}}h^{-1]} | 760 |
| P_{W}³⁾ | 2850 |
| Uneinheitlichkeit U ⁴⁾ | 0,3 |

| | |
|---|---|
| 3) Polymerisationsgrad gewichtsgemittelt, gelchromatographisch | |
| 4) P_{w}/Pₙ-1 | |

## Patentansprüche

1. Verfahren zur Herstellung von Polystyrol durch kontinuierliche anionische Polymerisation von Styrolmonomer mittels eines Katalysators auf der Grundlage eines Metallalkyls, dadurch gekennzeichnet, daß das Styrolmonomer einem im wesentlichen isotherm betriebenen, als in sich zurücklaufende Rohrschleife ausgebildeten Kreislaufreaktor zugeführt wird, wobei die Umlaufgeschwindigkeit des Reaktionsgemisches und die Verweilzeit so eingestellt sind, daß der Monomerumsatz mindestens 50 % erreicht und die Polymerisation in einem im wesentlichen rückvermischungsfrei arbeitenden Rohrreaktor zu Ende geführt wird.

2. Verfahren nach Anspruch 1, dadurch gekennzeichnet, daß die Temperatur im Kreislaufreaktor auf eine Temperatur zwischen 30 und 100°C eingestellt ist.

3. Verfahren nach Anspruch 1, dadurch gekennzeichnet, daß der Kreislaufreaktor die Rückvermischung fördernde Einbauten aufweist.

4. Verfahren nach Anspruch 1, dadurch gekennzeichnet, daß der Kreislaufreaktor eine spezifische Kühlfläche von wenigstens 50 m² je m³ Reaktorvolumen aufweist.

## Claims

1. A process for preparing polystyrene by continuous anionic polymerization of styrene monomer by means of a catalyst based on a metal alkyl, wherein the styrene monomer is fed to an essentially isothermally operated circulation reactor configured as a closed tube loop, with the circulation velocity of the reaction mixture and the residence time being set such that the monomer conversion reaches at least 50% and the polymerization is completed in an essentially backmixing-free tube reactor.

2. A process as claimed in claim 1, wherein the temperature in the circulation reactor is set to a temperature in the range from 30 to 100°C.

3. A process as claimed in claim 1, wherein the circulation reactor has internal fittings which promote backmixing.

4. A process as claimed in claim 1, wherein the circulation reactor has a specific cooling area of at least 50 m² per m³ of reactor volume.

## Revendications

1. Procédé de préparation de polystyrène par polymérisation anionique continue de monomères de styrène au moyen d'un catalyseur sur base d'un alkyle métallique, caractérisé en ce que les monomères de styrène sont introduits dans un réacteur à recirculation qui présente la forme d'une boucle tubulaire débouchant dans elle-même et qui est opéré de façon essentiellement isotherme, la vitesse de recirculation du mélange réactionnel et le temps de séjour moyen étant réglés de telle manière que la conversion des monomères atteint au moins 50 % et la polymérisation étant terminée dans un réacteur tubulaire travaillant essentiellement sans rétromélange.

2. Procédé selon la revendication 1, caractérisé en ce que la température dans le réacteur à recirculation est réglée à une température entre 30 et 100 °C.

3. Procédé selon la revendication 1, caractérisé en ce que le réacteur à recirculation présente des chicanes favorisant le rétromélange.

4. Procédé selon la revendication 1, caractérisé en ce que le réacteur à recirculation présente une surface de refroidissement spécifique d'au moins 50 m² par m³ de volume de réacteur.
